# EUROPEAN PATENT SPECIFICATION

(11) **EP 4 060 878 B1**
(45) Date of publication and mention of the grant of the patent: **02.04.2025**
(21) Application number: 21162800.3
(22) Date of filing: 16.03.2021
(51) Int. Cl.: H02K 7/10, B65G 23/08, H02K 5/16

(54) **CONVEYOR SYSTEM WITH MOTOR MODULE FOR POWERED ROLLER**
FÖRDERSYSTEM MIT MOTORMODUL FÜR EINE ANGETRIEBENE ROLLE
SYSTÈME DE CONVOYEUR AVEC MODULE MOTEUR POUR ROULEAU MOTORISÉ

(43) Date of publication of application: 21.09.2022
(73) Proprietor: Worldwide Logistics Corporation, New Taipei City (TW)
(72) Inventor: CHUANG, Kuo-Chieh, New Taipei city (TW)
(74) Representative: Celona, Antonio

(56) References cited:
- DE-A1- 1 763 613
- DE-A1- 4 426 106
- US-A- 3 310 691

## Description

### 1. Field of the Invention

The present invention relates to a conveyor system with a motor module that is mounted inside a powered roller of the conveyor system and is adapted to drive the powered roller.

### 2. Description of the Prior Arts

A conveyor system (roller conveyor) has a track. Multiple powered rollers are mounted on the track and are capable of receiving computer signals to rotate or to stop as desired, so that items can be put on the powered rollers to be conveyed under control of the computer.

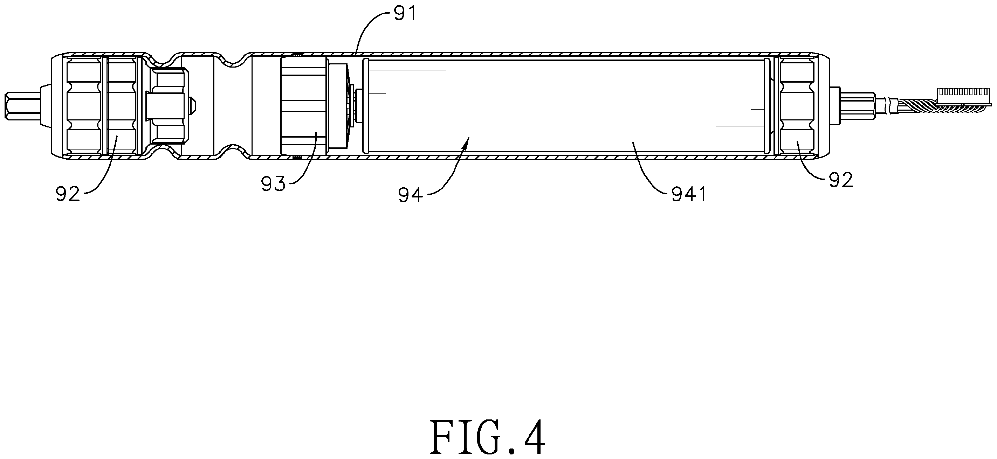

With reference to Fig. 4, a conveyor system (roller conveyor) has a conveying cylinder 91, two bearing assemblies 92, a coupler 93, and a driving device 94 (motor assembly). The conveying cylinder 91 is adapted to carry and convey the items. The two bearing assemblies 92 are mounted in the conveying cylinder 91 and are located respectively in two ends of the conveying cylinder 91. The coupler 93 and the driving device 94 are mounted in the conveying cylinder 91 and are connected to each other.

Conventionally, the driving device 94 has a driving device cylinder 941, a reduction gearbox (not shown in figures), a bearing base (not shown in figures), a stator (not shown in figures), a rotor (not shown in figures), and a circuit board (not shown in figures). When manufacturing the driving device 94, an operator first inserts the reduction gearbox into the driving device cylinder from an end opening of the driving device cylinder. Then, the operator connects the bearing base, the stator, the rotor, and the circuit board with wires by soldering. After soldering, the operator inserts the soldered parts from the end opening of the driving device cylinder into the driving device cylinder one by one. Especially, during insertion of the soldered parts, the operator must pull back the parts frequently to ensure that the wires are not damaged by over bending or squeezing during the insertion. Finally, the operator seals the end opening of the driving device cylinder and finishes the manufacturing process.

However, because the driving device cylinder has a certain length, the amount of the parts that need to be inserted is large, and during the process, forward insertion and backward pulling are alternately performed to prevent damage to the parts, so the manufacturing process of the driving device consumes lots of time and labor. If the length of the driving device cylinder is too long, which means the parts have to be inserted deeper, the manufacturing process will be more laborious and time-consuming. Further, the abovementioned structure increases the difficulty of subsequent maintenance and replacement of the driving device. To sum up, the conventional structure needs to be improved.

To overcome the shortcomings, the present invention provides conveyor system as defined by claim 1 with a motor module to mitigate or obviate the aforementioned problems.

The main objective of the present invention is to provide a motor module that combines the bearing base, the stator, the rotor, and the circuit board into a module, and simplifies the manufacturing process by modularizing the parts that are originally independent from one another.

The motor module is mounted in a driving device cylinder and is connected to a reduction gearbox. The motor module has a bearing base, a stator, a rotor, a fixing base, and a circuit board. The bearing base has a bearing base casing. An outer annular surface of the bearing base casing is securely mounted on an inner annular surface of the driving device cylinder. The stator is mounted securely to the bearing base and has a stator casing. An outer annular surface of the stator casing is securely mounted on the inner annular surface of the driving device cylinder. An end surface of the stator casing is connected to an end surface of the bearing base casing. The rotor is rotatably mounted in the stator, is rotatably mounted through the bearing base, and is connected to the reduction gearbox. The fixing base is mounted securely to the stator and has a fixing base casing. An outer annular surface of the fixing base casing is securely mounted on the inner annular surface of the driving device cylinder. An end surface of the fixing base casing is connected to the other end surface of the stator casing, which is opposite to the bearing base casing. The circuit board is mounted in the fixing base and is electrically connected to the stator.

By the bearing base, the stator, and the fixing base sequentially mounted to each other, and the bearing base casing, the stator casing, and the fixing base casing sequentially connected to each other, the present invention combines the bearing base, the stator, the rotor, and the circuit board into a module, while these parts are independent from each other in the conventional powered roller. Therefore, during manufacturing of the powered roller, only the motor module needs to be inserted into the driving device cylinder, and the bearing base, the stator, the rotor, fixing base, and the circuit board can be installed in the driving device cylinder in one single step. Thus, the present invention reduces the difficulty of manufacturing the powered roller, thereby reducing the time and labor cost of manufacturing.

Other objectives, advantages and novel features of the invention will become more apparent from the following detailed description when taken in conjunction with the accompanying drawings.

### IN THE DRAWINGS

Fig. 1 is a perspective view of a motor module in accordance with the present invention;
Fig. 2 is an exploded view of the motor module in Fig. 1;
Fig. 3 is a schematic diagram of the motor module in Fig. 1, showing the motor module installed in a driving device cylinder of a driving device of a powered roller; and
Fig. 4 is a side view in cross-section of a conventional powered roller.

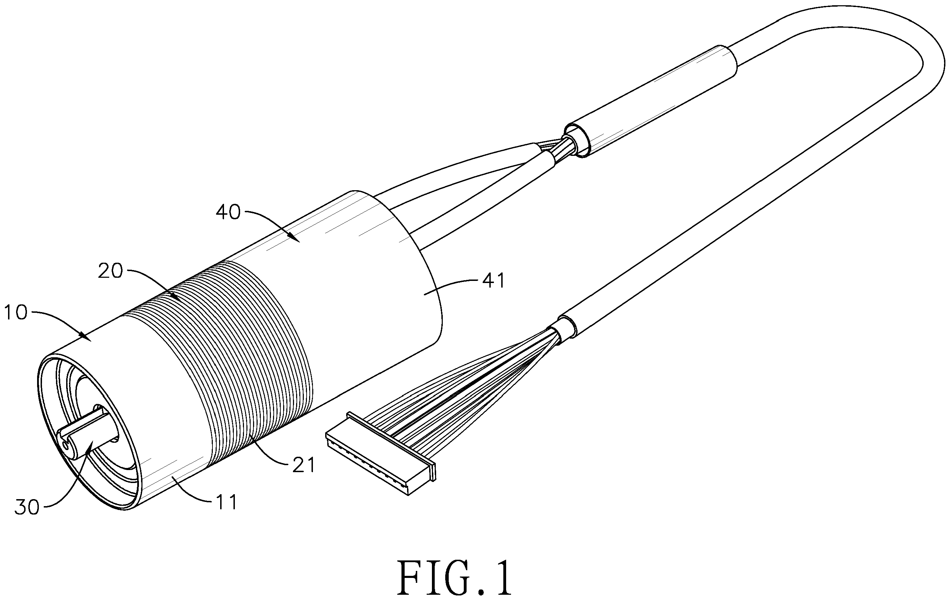

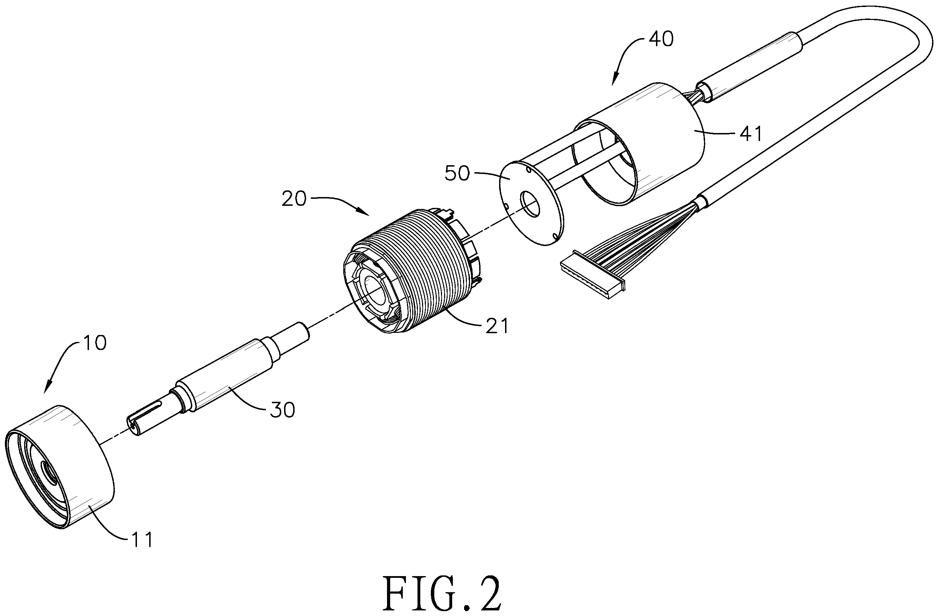

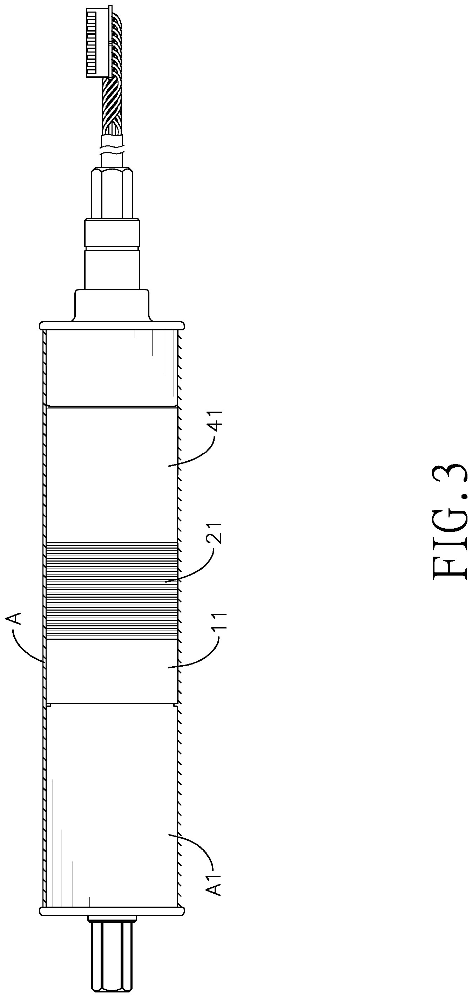

With reference to Figs. 1, 2, and 3, a motor module in accordance with the present invention is adapted to be mounted in a driving device cylinder A of a driving device of a powered roller, and is adapted to be connected to a reduction gearbox A1. Herein, the driving device will be installed in a conveying cylinder (not shown in figures) and connected to a coupler (not shown in figures), so that the driving device can drive the conveying cylinder to rotate to convey items.

The motor module comprises a bearing base 10, a stator 20, a rotor 30, a fixing base 40, and a circuit board 50.

The bearing base 10 has a bearing base casing 11. In this embodiment, an outer annular surface of the bearing base casing 11 is adapted to tightly fit against an inner annular surface of the driving device cylinder A, which means the whole outer annular surface is tightly fitted in the driving device cylinder A. But in other embodiments, the outer annular surface of the bearing base casing 11 can only be mounted securely on the inner annular surface of the driving device cylinder A instead of having the whole outer annular surface tightly fitted in the driving device cylinder A.

The stator 20 is securely mounted with the bearing base 10 and has a stator casing 21. An end surface of the stator casing 21 is connected to an end surface of the bearing base casing 11. In this embodiment, an outer annular surface of the stator casing 21 is adapted to tightly fit against the inner annular surface of the driving device cylinder A, but in other embodiments the outer annular surface of the stator casing 21 can only be mounted securely on the driving device cylinder A but not the whole outer annular surface tightly fitted in the driving device cylinder A.

The rotor 30 is rotatably mounted in the stator 20, is rotatably mounted through the bearing base 10, and is connected to the reduction gearbox A1.

The fixing base 40 is securely mounted to the stator 20 and has a fixing base casing 41. An end surface of the fixing base casing 41 is connected to the other end surface, which is opposite to the bearing base casing 11, of the stator casing 21. In this embodiment, an outer annular surface of the fixing base casing 41 is adapted to tightly fit against the inner annular surface of the driving device cylinder A, but in other embodiments the outer annular surface of the fixing base casing 41 can only be mounted securely on the driving device cylinder A instead of having the whole outer annular surface tightly fitted in the driving device cylinder A.

The circuit board 50 is mounted in the fixing base 40, and is electrically connected to the stator 20.

When manufacturing the driving device of the powered roller, an operator first puts the reduction gearbox A1 into the driving device cylinder A from an end opening of the driving device cylinder A. Then, the operator puts the motor module in the present invention into the driving device cylinder A from the other end opening of the driving device cylinder A, which means the reduction gearbox A1 and the motor module are inserted into the driving device cylinder A respectively from two ends of the driving device cylinder A. When being installed in, the bearing base 10 is faced to the reduction gearbox A1, and a part of the rotor 30 that protrudes out from the bearing base 10 is connected to the reduction gearbox A1. After the motor module is installed, the manufacturing process is done.

By the bearing base 10, the stator 20, and the fixing base 40 sequentially mounted to each other, and the bearing base casing 11, the stator casing 21, and the fixing base casing 41 sequentially connected to each other, the present invention combines the bearing base 10, the stator 20, the rotor 30, the fixing base 40, and the circuit board 50 into a module. Therefore, during manufacturing of the powered roller, only the motor module needs to be inserted into the driving device cylinder A, and the bearing base 10, the stator 20, the rotor 30, the fixing base 40, and the circuit board 50 can be installed in the driving device cylinder in one single step. Besides, the bearing base casing 11, the stator casing 21, and the fixing base casing 41 are adapted to tightly fit against the inner annular surface of the driving device cylinder A, so that the motor module can be installed firmly in the driving device cylinder A. In summary, the present invention reduces the difficulty of manufacturing the powered roller, thereby reducing the time and labor cost of manufacturing.

## Claims

1. A conveyor system comprising a conveying cylinder rotated by a driving device and adapted to carry and convey items, the driving device comprising a driving device cylinder (A), a motor module mounted in the driving device cylinder (A), the motor module being connected to a reduction gearbox (A1) wherein the motor module comprises:
a bearing base (10) having
a bearing base casing (11); an outer annular surface of the bearing base casing (11) securely mounted on an inner annular surface of the driving device cylinder (A);
a stator (20) mounted securely to the bearing base (10) and having
a stator casing (21); an outer annular surface of the stator casing (21) securely mounted on the inner annular surface of the driving device cylinder (A); an end surface of the stator casing (21) connected to an end surface of the bearing base casing (11);
a rotor (30) rotatably mounted in the stator (20), rotatably mounted through the bearing base (10), and connected to the reduction gearbox (A1);
a fixing base (40) mounted securely with the stator (20) and having
a fixing base casing (41);
**characterized in that** an outer annular surface of the fixing base casing (41) is securely mounted on the inner annular surface of the driving device cylinder (A); an end surface of the fixing base casing (41) connected to the other end surface of the stator casing (21), which is opposite to the bearing base casing (11); and
a circuit board (50) mounted in the fixing base (40) and electrically connected to the stator (20); wherein:
an outer diameter of the bearing base casing (11), an outer diameter of the stator casing (21), and an outer diameter of the fixing base casing (41) are the same.

2. The conveyor system as claimed in claim 1, wherein
the outer annular surface of the bearing base casing (11) is adapted to tightly fit against the inner annular surface of the driving device cylinder (A);
the outer annular surface of the stator casing (21) is adapted to tightly fit against the inner annular surface of the driving device cylinder (A); and
the outer annular surface of the fixing base casing (41) is adapted to tightly fit against the inner annular surface of the driving device cylinder (A).

## Patentansprüche

1. Fördersystem, umfassend einen Förderzylinder, der durch eine Antriebsvorrichtung gedreht wird und dazu geeignet ist, Gegenstände zu tragen und zu befördern, wobei die Antriebsvorrichtung einen Antriebsvorrichtungszylinder (A) und ein in dem Antriebsvorrichtungszylinder (A) angebrachtes Motormodul umfasst, wobei das Motormodul mit einem Untersetzungsgetriebe (AI) verbunden ist, wobei das Motormodul umfasst:
eine Lagerbasis (10), die aufweist
ein Lagerbasisgehäuse (11); eine äußere Ringfläche des Lagerbasisgehäuses (11), die sicher an einer inneren Ringfläche des Antriebsvorrichtungszylinders (A) angebracht ist;
einen Stator (20), der sicher an der Lagerbasis (10) angebracht ist und aufweist ein Statorgehäuse (21); eine äußere Ringfläche des Statorgehäuses (21), die sicher an der inneren Ringfläche des Antriebsvorrichtungszylinders (A) angebracht ist; eine Endfläche des Statorgehäuses (21), die mit einer Endfläche des Lagerbasisgehäuses (11) verbunden ist;
einen Rotor (30), der drehbar in dem Stator (20) angebracht ist und drehbar durch die Lagerbasis (10) angebracht ist und mit dem Untersetzungsgetriebe (AI) verbunden ist;
eine Befestigungsbasis (40), die sicher an dem Stator (20) angebracht ist und aufweist
ein Befestigungsbasisgehäuse (41);
**dadurch gekennzeichnet, dass** eine äußere Ringfläche des Befestigungsbasisgehäuses (41) sicher an der inneren Ringfläche des Antriebsvorrichtungszylinders (A) angebracht ist; eine Endfläche des Befestigungsbasisgehäuses (41), die mit der anderen Endfläche des Statorgehäuses (21) verbunden ist, die dem Lagerbasisgehäuse (11) gegenüberliegt; und
eine Leiterplatte (50), die in der Befestigungsbasis (40) angebracht ist und elektrisch mit dem Stator (20) verbunden ist; wobei:
ein Außendurchmesser des Lagerbasisgehäuses (11), ein Außendurchmesser des Statorgehäuses (21) und ein Außendurchmesser des Befestigungsbasisgehäuses (41) gleich sind.

2. Fördersystem nach Anspruch 1, wobei
die äußere Ringfläche des Lagerbasisgehäuses (11) dazu geeignet ist, fest gegen die innere Ringfläche des Antriebsvorrichtungszylinders (A) gepresst zu sein;
die äußere Ringfläche des Statorgehäuses (21) dazu geeignet ist, fest gegen die innere Ringfläche des Antriebsvorrichtungszylinders (A) gepresst zu sein; und
die äußere Ringfläche des Befestigungsbasisgehäuses (41) dazu geeignet ist, fest gegen die innere Ringfläche des Antriebsvorrichtungszylinders (A) gepresst zu sein.

## Revendications

1. Système de convoyeur comprenant un cylindre de convoyage entraîné en rotation par un dispositif d'entraînement et adapté pour transporter et convoyer des articles, le dispositif d'entraînement comprenant un cylindre de dispositif d'entraînement (A), un module moteur monté dans le cylindre de dispositif d'entraînement (A), le module moteur étant relié à un réducteur de vitesse (A1), dans lequel le module moteur comprend :
une base de support (10) ayant
un carter de base de support (11) ; une surface annulaire extérieure du carter de base de support (11) montée solidement sur une surface annulaire intérieure du cylindre de dispositif d'entraînement (A) ;
un stator (20) monté solidement sur la base de support (10) et ayant
un carter de stator (21) ; une surface annulaire extérieure du carter de stator (21) montée solidement sur la surface annulaire intérieure du cylindre de dispositif d'entraînement (A) ; une surface d'extrémité du carter de stator (21) reliée à une surface d'extrémité du carter de base de support (11) ;
un rotor (30) monté rotatif dans le stator (20), monté rotatif à travers la base de support (10), et relié au réducteur de vitesse (A1) ;
une base de fixation (40) montée solidement avec le stator (20) et ayant un carter de base de fixation (41) ;
**caractérisé en ce qu'**une surface annulaire extérieure du carter de base de fixation (41) est montée solidement sur la surface annulaire intérieure du cylindre de dispositif d'entraînement (A) ; une surface d'extrémité du carter de base de fixation (41) reliée à l'autre surface d'extrémité du carter de stator (21), qui est opposée au carter de base de support (11) ; et
une carte de circuit imprimé (50) montée dans la base de fixation (40) et reliée électriquement au stator (20) ; dans lequel :
un diamètre extérieur du carter de base de support (11), un diamètre extérieur du carter de stator (21) et un diamètre extérieur du carter de base de fixation (41) sont identiques.

2. Système de convoyeur selon la revendication 1, dans lequel
la surface annulaire extérieure du carter de base de support (11) est adaptée pour s'ajuster étroitement contre la surface annulaire intérieure du cylindre de dispositif d'entraînement (A) ;
la surface annulaire extérieure du carter de stator (21) est adaptée pour s'ajuster étroitement contre la surface annulaire intérieure du cylindre de dispositif d'entraînement (A) ; et
la surface annulaire extérieure du carter de base de fixation (41) est adaptée pour s'ajuster étroitement contre la surface annulaire intérieure du cylindre de dispositif d'entraînement (A).
